# EUROPÄISCHE PATENTSCHRIFT

(11) **EP 0 995 626 B1**
(45) Veröffentlichungstag und Bekanntmachung des Hinweises auf die Patenterteilung: **17.12.2003**
(21) Anmeldenummer: 99120199.7
(22) Anmeldetag: 09.10.1999
(51) Int. Cl.: B60K 26/02

(54) **Lagermodul für ein Betätigungselement**
Modular bearing for actuator
Palier modulaire pour dispositif de commande

(30) Priorität: 19.10.1998 DE 19848093
(43) Veröffentlichungstag der Anmeldung: 26.04.2000
(73) Patentinhaber: Siemens Aktiengesellschaft, 80333 München (DE)
(72) Erfinder: Weis, Christian, 55120 Mainz (DE)

(56) Entgegenhaltungen:
- DE-A- 4 300 096
- DE-A- 4 426 549

## Beschreibung

Die Erfindung befaßt sich mit einem Lagermodul für ein Betätigungselement, das gegen die Kraft wenigstens einer Rückstellfeder verstellbar ist, wobei beim Betätigen des Betätigungselements eine durch Reibung erzeugte Krafthysterese auftritt.

Derartige Module setzt man beispielsweise bei Fahrpedalen von Kraftfahrzeugen ein, deren Stellung von einem elektronischen Sensor erfaßt wird, dessen Daten elektronisch an die Motorsteuerung weitergegeben werden. Das Modul erzeugt dabei eine Krafthysterese, die beim Betätigen des Fahrpedals eine an Seilzugübertragungen angelehnte Betätigungscharakteristik erzeugt, an die die Autofahrer gewöhnt sind und die sich aus Komfortgründen bewährt hat.

Die bisher bekannten Module, wie sie beispielsweise aus der DE 195 17 172 A1 (Oberbegriff von Anspruch 1) oder der noch unveröffentlichten Patentanmeldung DE 197 37 289.9 bekannt sind, benötigen eine Vielzahl von Bauteilen und sind dementsprechend aufwendig in der Herstellung und Montage.

Die Aufgabe der Erfindung besteht darin, ein Modul für ein Betätigungselement zu schaffen, das mit einer verringerten Anzahl an Bauteilen die gewünschte Krafthysterese erzeugen kann.

Erfindungsgemäß wird die Aufgabe dadurch gelöst, daß die Kraftübertragung zwischen der Rückstellfeder und dem Betätigungselement über ein Reibelement erfolgt, das beim Verstellen des Betätigungselements auf einer dem freien Ende der Rückstellfeder zugeordneten Reibfläche gleitet, wobei es in Abhängigkeit von der Verstellrichtung die Rückstellfeder spannt beziehungsweise durch die Rückstellkraft der Rückstellfeder rückstellbar ist.

Die erfindungsgemäße Lösung erzeugt damit die gewünschte Krafthysterese unmittelbar im Rückstellmechanismus der Rückstellfeder, ohne daß zusätzliche gelagerte Bauelemente, wie zum Beispiel Wippen, die teuer und störanfällig sind, notwendig wären. Die Integration der Reibungserzeugung in den Rückstellmechanismus verringert dabei die Anzahl notwendiger Bauelemente und führt zu einem konstruktiv einfacheren und kostengünstiger herzustellenden Modul.

In bevorzugter Ausführungsform der Erfindung ist vorgesehen, daß zwei Rückstellfedern redundant angeordnet sind. Zum einen wird durch die Verdoppelung der Anzahl der Rückstellfedern eine höhere Rückstellkraft möglich, so daß sich der Pedalwiderstand in einem weiteren Rahmen variieren läßt. Die zweite Rückstellfeder kann beim Bruch einer Rückstellfeder auch für noch ausreichende Rückstelleigenschaften sorgen, so daß der Autofahrer den Bruch einer Rückstellfeder zwar am reduzierten Pedalwiderstand erkennt, aber dennoch problemlos die nächste Werkstatt ansteuern kann. Ein Hängenbleiben des Gaspedals wird sicher vermieden.

In weiterer bevorzugter Ausführungsform der Erfindung ist vorgesehen, daß die Rückstellfedern Blattfedern sind, die einseitig eingespannt sind und deren Flanken an ihren freien Enden die Reibflächen bilden.

Blattfedern erlauben eine besonders einfache konstruktive Ausbildung des Moduls, da sie einerseits leicht in entsprechenden Gehäuseausnehmungen einspannbar sind und andererseits aufgrund ihrer glattflächigen Flanken geeignet sind, unmittelbare Bestandteile der Reibpaarung zu bilden. Andere Federelemente, wie zum Beispiel Schraubenfedern, sind grundsätzlich ebenfalls denkbar, wobei jedoch am freien Ende der Federelemente geeignete Reibflächen vorgesehen sein sollten.

Vorzugsweise sind die Blattfedern zwischen ihren Einspannstellen und den Reibflächen um ungefähr 90° gekrümmt. Auf diese Weise erreicht man trotz kompakter Gehäuseabmessungen Längen von Blattfedern, die in der Lage sind, über den Verstellbereich des Betätigungselements die gewünschten Reibkräfte zwischen ihren Flanken und den Reibelementen zu erzeugen.

In weiterer bevorzugter Ausführungsform der Erfindung ist vorgesehen, daß das Betätigungselement mit einem Drehglied mit einer der Anzahl der Rückstellfedern entsprechenden Anzahl von Hebelarmen gekoppelt ist, an deren Enden die Reibelemente angeordnet sind.

Die an den Enden der Hebelarme angeordneten Reibelemente führen folglich bei der Betätigung des Betätigungselements eine Bewegung auf einer Kreisbahn aus, wobei sie einerseits die Blattfedern aufbiegen und gleichzeitig eine Gleitbewegung auf deren Flanke ausführen. Das Drehglied selbst ist dabei einfach aufgebaut und läßt sich leicht auf der Lagerwelle des Betätigungselements anordnen.

Vorzugsweise ist der Drehwinkel des Drehgliedes durch Anschläge zwischen zwei Endstellungen begrenzt. Dadurch wird verhindert, daß durch ein übermäßiges Verdrehen des Drehgliedes eine Beschädigung der Rückstellfedern oder ein Abrutschen der Reibelemente von den Reibflächen erfolgt. Bei einem Fahrpedal beispielsweise ist ein Schwenkwinkel von ungefähr 20° üblich, wobei der Schwenkbereich durch die Leerlaufstellung und die Vollgasstellung (gegebenenfalls Kick-Down-Stellung) begrenzt ist.

Weiterhin ist es zweckmäßig, die Reibelemente gelenkig an den Hebelarmenden zu lagern. Da die Hebelarmenden des Drehgliedes beim Betätigen des Betätigungselements eine Drehbewegung relativ zu den Flanken der Blattfedern ausführen, erreicht man bei flächig an den Blattfedern anliegenden Reibelementen in allen Winkelstellungen eine gleichmäßige Anlage. Die gleichmäßige Anlage und der daraus resultierende gleichmäßige Verschleiß des Reibelements sorgen für eine insgesamt längere Haltbarkeit der Reibelemente, als dies bei einer lediglich punktuellen oder linienförmigen Anlage des Reibelements an den Flanken der Blattfedern der Fall wäre.

Nachfolgend wird anhand der beigefügten Zeichnungen näher auf ein Ausführungsbeispiel der Erfindung eingegangen.

Es zeigen:
- Figur 1:: einen Querschnitt eines Lagermoduls in einer Ruhestellung,
- Figur 2:: das Lagermodul gemäß Figur 1 in seiner Endstellung,
- Figur 3:: ein Schaubild der Krafthysterese beim Betätigen eines mit einem Lagermodul gemäß Figur 1 gekoppelten Fahrpedals.

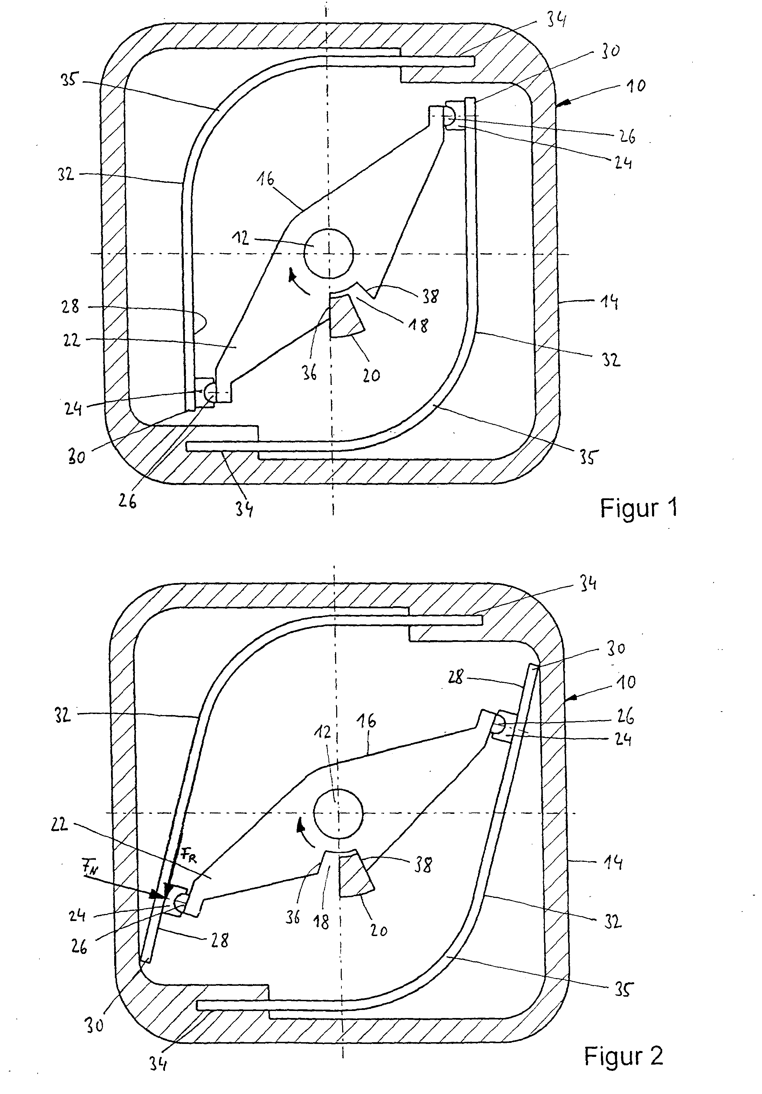

In Figur 1 ist ein Lagermodul 10 für ein nicht dargestelltes Fahrpedal eines Kraftfahrzeuges dargestellt, das um eine Welle 12 verschwenkbar ist, die in den beiden Seitenwänden eines Gehäuses 14 in nicht näher dargestellter Weise gelagert ist.

Auf der Lagerwelle 12 ist drehstarr ein Drehglied 16 angeordnet, das über eine Aussparung 18 verfügt, in die ein gehäuseseitig montierter Anschlag 20 ragt. Die Aussparung 18 ist derart breit gewählt, daß sich ein möglicher Schwenkwinkel des Drehgliedes 16 um ungefähr 20° ergibt, der dem Verschwenken des Fahrpedals von der Leerlauf- in die Vollgasstellung entspricht.

Das Drehglied 16 verfügt über zwei Hebelarme 22, an deren Enden jeweils ein Reibelement 24 angeordnet ist. Das Reibelement 24 ist über ein Gelenk 26 an dem Hebelarm 22 festgelegt, so daß es relativ zum Hebelarm 22 verschwenkbar ist.

Die Reibelemente 24 gleiten beim Verschwenken auf Seitenflanken 28 im Bereich der freien Enden 30 von Blattfedern 32, die einseitig an einer gehäuseseitig festgelegten Einspannstelle 34 eingespannt sind. Die Blattfedern 32 besitzen in ihrem mittleren Bereich eine Krümmung 35, so daß sie trotz relativ großer Gesamtlänge platzsparend in dem kompakten Gehäuse 14 unterzubringen sind.

In der in Figur 1 dargestellten Leerlaufstellung des Fahrpedals liegen die freien Enden 30 der Blattfedern 32 mit ihren Seitenflanken 28 mit leichter Vorspannkraft an den Reibelementen 24 an. Damit drücken die Blattfedern 32 das Drehglied 16 mit einer ersten Kante 36 der Aussparung 18 gegen den Anschlag 20, so daß das Fahrpedal die Leerlaufstellung einnimmt.

Wird nun das Fahrpedal betätigt, gelangt das Drehglied 16 von der in Figur 1 dargestellten Leerlaufstellung bis in die in Figur 2 gezeigte, der Vollgasstellung des Fahrpedals entsprechende Endstellung, in welcher eine zweite Kante 38 der Aussparung 18 an dem Anschlag 20 anliegt. Das Fahrpedal kann nicht mehr weiter durchgetreten werden.

Beim Verschwenken des Drehgliedes 16 beschreiben die Reibelemente 24 an den Enden der Hebelarme 22 eine kreisförmige Bewegung und drücken dabei die Blattfedern 32 auseinander. Die Reibelemente 24 führen dabei eine leichte Schwenkbewegung um das ihnen jeweils zugeordnete Gelenk 26 aus, da die Seitenflanken 28 der Blattfedern 32 nicht der Kreisbahn der Hebelarmenden folgen.

Die Geometrie der Blattfeder 32 und der Hebelarme 22 ist so gewählt, daß es in dem Bereich zwischen den beiden Endstellungen nicht zu einem Verklemmen der Blattfedern 32 mit den Reibelementen 24 kommen kann, sondern immer ein ausreichender Kraftüberschuß zum Rückstellen des Fahrpedals vorhanden ist. Hierzu muß der - bezogen auf die Lagerwelle 12-tangentiale Anteil der Normalkraft zwischen den Seitenflanken 28 und den Reibelementen 24 immer ausreichend größer sein als der - wiederum auf die Lagerwelle 12 bezogen - Tangentialanteil der Reibkräfte. Die Höhe der Reibkräfte läßt sich durch die Wahl der Reibpartner, die Hebelarmverhältnisse und die Kennlinien der Federn beeinflussen.

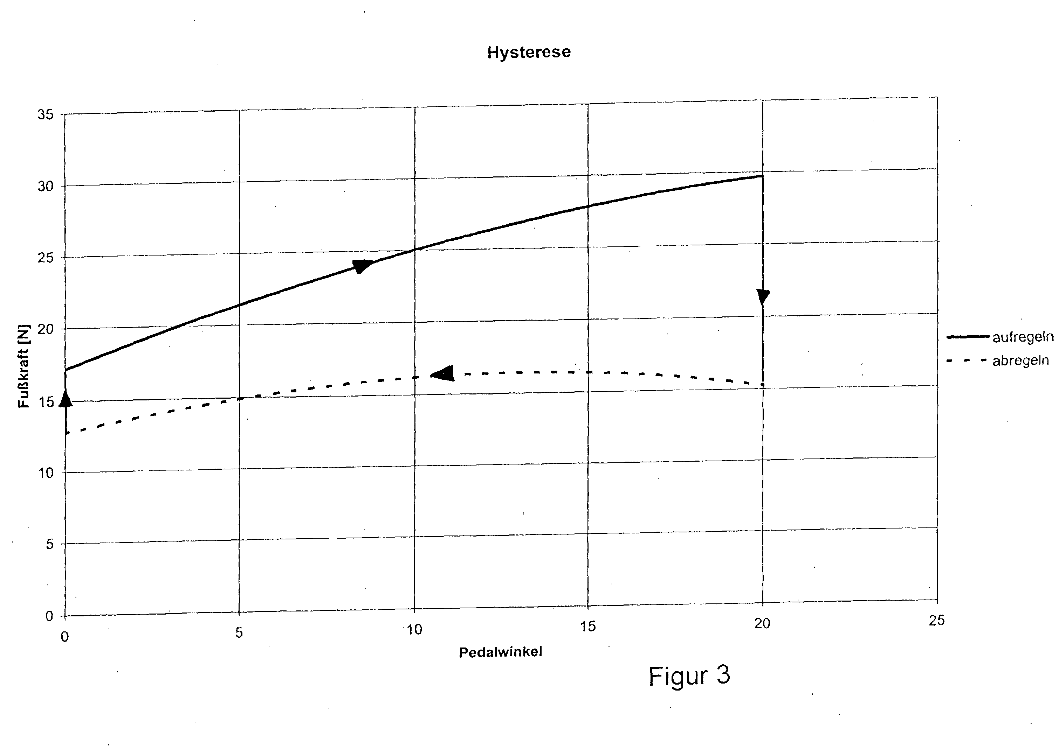

In Figur 3 zeigt als Diagramm die notwendige Fußkraft zum Betätigen des mit dem Lagermodul 10 gekoppelten Fahrpedals beim Niedertreten (Aufriegeln) und beim Loslassen (Abriegeln) beziehungsweise statischen Halten. Die Null-Grad-Stellung entspricht dabei der in Figur 1 dargestellten Stellung des Lagermoduls 10, während der Pedalwinkel 20° für die in Figur 2 abgebildete Vollaststellung des Fahrpedals steht.

Beginnend von der in Figur 1 veranschaulichten Leerlaufstellung ist zunächst eine Kraft von ungefähr 17 Newton notwendig, um den Reibwiderstand der Reibelemente und die Vorspannkräfte der Blattfedern 32 zu überwinden. Beim weiteren Durchtreten des Fahrpedals steigen sowohl die Rückstellkräfte als auch die Reibkräfte an, so daß zum Erreichen der in Figur 2 dargestellten Vollaststellung eine Pedalkraft von knapp 30 N erforderlich ist. Es ergibt sich also eine progressive Kennlinie für die Pedalkraft beim Aufregeln der Verbrennungskraftmaschine.

Zum Halten des Fahrpedals in den verschiedenen Stellungen ist ein durch die gestrichelte Linie dargestellter Kraftaufwand notwendig. In der Vollaststellung ist folglich eine Haltekraft von 15 N erforderlich, die nach einem leichten Anstieg im Teillastbereich auf ungefähr 17 N bis auf 13 N in der Leerlaufstellung zurückgeht. Der erforderliche Kraftaufwand bestimmt sich dabei aus der Differenz zwischen den von den Blattfedern 32 aufgebrachten Rückstellkräften und den entgegenwirkenden Reibkräften. Die Tatsache, daß die Haltekraft des Fahrpedals in der Vollaststellung niedriger als im Teillastbereich liegt, ist darauf zurückzuführen, daß die tangential bezüglich der Lagerwelle 12 wirkenden Anteile der Reibkräfte im Bereich der Vollaststellung stärker ansteigen als die Tangentialanteile der durch die Blattfedern 32 ausgeübten Rückstellkräfte.

Wie bereits erwähnt, kann die Kennlinie durch die Wahl der Reibpartner, die Hebelarmverhältnisse und die Art und Einbaurichtung der Federn beeinflußt werden. So ist es beispielsweise ohne weiteres denkbar, eine degressive Federkennlinie dadurch zu erzielen, daß beim Verschwenken der Reibelemente zur Vollaststellung hin kein Spannen, sondern ein Entlasten der Blattfedern 32 erfolgt. Auch der Einsatz anderer Federelemente, wie zum Beispiel von Spiralfedern, ist ohne weiteres denkbar.

Das vorbeschriebene Lagermodul 10 läßt sich für Betätigungselemente aller Art einsetzen, beispielsweise auch für Drehgriffe an Motorrädern oder sonstige Steuerungshebel von Maschinen und Anlagen.

### Bezugszeichenliste:

- 10: Lagermodul
- 12: Welle
- 14: Gehäuse
- 16: Drehglied
- 18: Aussparung
- 20: Anschlag
- 22: Hebelarme
- 24: Reibelement
- 26: Gelenk
- 28: Seitenflanken
- 30: freies Ende
- 32: Blattfedern
- 34: freies Ende
- 35: Krümmung
- 36: erste Kante
- 38: zweite Kante

## Patentansprüche

1. Lagermodul für ein Betätigungselement, das gegen die Kraft wenigstens einer Rückstellfeder (32) verstellbar ist, wobei beim Betätigen des Betätigungselements eine durch Reibung erzeugte Krafthysterese auftritt, **dadurch gekennzeichnet, daß** die Kraftübertragung (12, 16, 22) zwischen der Rückstellfeder (32) und dem Betätigungselement über ein Reibelement (24) erfolgt, das beim Verstellen des Betätigungselements auf einer dem freien Ende (30) der Rückstellfeder (32) zugeordneten Reibfläche (28) gleitet, wobei es in Abhängigkeit von der Verstellrichtung die Rückstellfeder (32) spannt beziehungsweise durch die Rückstellkraft der Rückstellfeder (32) rückstellbar ist.

2. Lagermodul nach Anspruch 1, **dadurch gekennzeichnet, daß** zwei Rückstellfedern (32) redundant angeordnet sind.

3. Lagermodul nach Anspruch 1 oder 2, **dadurch gekennzeichnet, daß** die Rückstellfedern Blattfedern (32) sind, die einseitig eingespannt sind und deren Flanken (28) an ihren freien Enden (30) die Reibflächen bilden.

4. Lagermodul nach Anspruch 3, **dadurch gekennzeichnet, daß** die Blattfedern (32) zwischen ihren Einspannstellen (34) und den Reibflächen (28) um ungefähr 90° gekrümmt sind.

5. Lagermodul nach einem der vorhergehenden Ansprüche, **dadurch gekennzeichnet, daß** das Betätigungselement mit einem Drehglied (16) mit einer der Anzahl der Rückstellfedern (32) entsprechenden Anzahl von Hebelarmen (22) gekoppelt ist, an deren Enden die Reibelemente (24) angeordnet sind.

6. Lagermodul nach Anspruch 5, **dadurch gekennzeichnet, daß** der Drehwinkel des Drehglieds (16) durch Anschläge (18, 20, 36, 38) zwischen zwei Endstellungen begrenzt ist.

7. Lagermodul nach Anspruch 5 oder 6, **dadurch gekennzeichnet, daß** die Reibelemente (24) gelenkig an den Hebelarmenden (26) gelagert sind.

8. Lagermodul nach einem der vorhergehenden Ansprüche, **dadurch gekennzeichnet, daß** das Betätigungselement das Fahrpedal eines Kraftfahrzeuges ist.

## Claims

1. Bearing module for an actuating element which can be displaced counter to the force of at least one return spring (32), a force hysteresis produced by friction occurring when the actuating element is actuated, **characterized in that** force is transmitted (12, 16, 22) between the return spring (32) and the actuating element via a friction element (24) which slides on a friction surface (28) assigned to the free end (30) of the return spring (32) as the actuating element is displaced, the return spring (32) either being tensioned on it as a function of the direction of displacement or being returnable by the restoring force of the return spring (32).

2. Bearing module according to Claim 1, **characterized in that** two return springs (32) are arranged in a redundant manner.

3. Bearing module according to Claim 1 or 2, **characterized in that** the return springs are leaf springs (32) which are clamped at one end and the flanks (28) of which form the friction surfaces at their free ends (30).

4. Bearing module according to Claim 3, **characterized in that** the leaf springs (32) are curved by about 90° between their clamping locations (34) and the friction surfaces (28).

5. Bearing module according to one of the preceding claims, **characterized in that** the actuating element is coupled to a rotary member (16) with a number of lever arms (22) which corresponds to the number of return springs (32) and at the ends of which the friction elements (24) are arranged.

6. Bearing module according to Claim 5, **characterized in that** the angle of rotation of the rotary member (16) is limited between two end positions by stops (18, 20, 36, 38).

7. Bearing module according to Claim 5 or 6, **characterized in that** the friction elements (24) are mounted in an articulated manner on the ends (26) of the lever arms.

8. Bearing module according to one of the preceding claims, **characterized in that** the actuating element is the accelerator pedal of a motor vehicle.

## Revendications

1. Module de support pour élément d'actionnement, qui est réglable à l'encontre de la force d'au moins un ressort de rappel (32), une hystérésis de force créée par frottement se produisant lors de l'actionnement de l'élément d'actionnement, **caractérisé en ce que** la transmission de force (12, 16, 22) entre le ressort de rappel (32) et l'élément d'actionnement a lieu par l'intermédiaire d'un élément de frottement (24) qui glisse, lors du déplacement de l'élément d'actionnement, sur une surface de frottement (28) associée à l'extrémité libre (30) du ressort de rappel (32), l'élément de frottement tendant le ressort de rappel (32) en fonction du sens de déplacement ou pouvant être rappelé par la force de rappel des ressorts de rappel (32).

2. Module de support selon la revendication 1, **caractérisé en ce que** deux ressorts de rappel (32) sont disposés en redondance.

3. Module de support selon la revendication 1 ou 2, **caractérisé en ce que** les ressorts de rappel sont des ressorts à lames (32), qui sont tendus d'un côté et dont les flancs (28) forment, à leurs extrémités libres, (30) les surfaces de frottement.

4. Module de support selon la revendication 3, **caractérisé en ce que** les ressorts à lames (32) sont recourbés d'environ 90° entre leurs points de serrage (34) et les surfaces de frottement (28).

5. Module de support selon une des revendications précédentes, **caractérisé en ce que** l'élément d'actionnement est couplé par un élément de rotation (16) avec un nombre de bras de leviers (22) correspondant au nombre de ressorts de rappel (32), aux extrémités desquels les éléments de frottement (24) sont disposés.

6. Module de support selon la revendication 5, **caractérisé en ce que** l'angle de rotation de l'élément de rotation (16) est limité par des butées (18, 20, 36, 38) entre deux positions extrêmes.

7. Module de support selon la revendication 5 ou 6, **caractérisé en ce que** les éléments de frottement (24) sont montés de manière articulée sur les extrémités des bras de leviers (26).

8. Module de support selon une des revendications précédentes, **caractérisé en ce que** l'élément d'actionnement est la pédale d'accélération d'un véhicule automobile.
